# EUROPÄISCHE PATENTANMELDUNG

(11) **EP 1 611 939 A1**
(43) Veröffentlichungstag der Anmeldung: **04.01.2006**
(21) Anmeldenummer: 05450082.2
(22) Anmeldetag: 03.05.2005
(51) Int. Cl.: B01D 46/52

(54) **Luftfilter**

(30) Priorität: 01.07.2004 AT 11102004
(71) Anmelder: Spitzer, Harald, 4063 Hörsching (AT)
(72) Erfinder: Spitzer, Harald, 4063 Hörsching (AT)
(74) Vertreter: Hübscher, Helmut

(57) **Zusammenfassung**

Es wird ein Luftfilter mit einer eine Filtermembran (1) fest aufnehmenden Halterung (2) zum Befestigen des Luftfilters in einem Schmutzbehälter (4) gezeigt, der zum Entleeren des vom Filter aus der Luft abgetrennten Schmutzes einen Auslaß (18) aufweist. Um vorteilhafte Konstruktionsverhältnisse zu schaffen, wird vorgeschlagen, daß die Halterung (2) eine gegenüber der Filtermembran (1) bewegbare Reinigungseinrichtung trägt, die beim Reinigen der Filtermembran (1) an der Filtermembran (1) zumindest bereichsweise anliegt.

## Beschreibung

Die Erfindung bezieht sich auf einen Luftfilter mit einer eine Filtermembran fest aufnehmenden Halterung zum Befestigen des Luftfilters in einem Schmutzbehälter, der zum Entleeren des vom Filter aus der Luft abgetrennten Schmutzes einen Auslaß aufweist.

Um einen Luftfilter von anhaftendem Schmutz reinigen zu können, ist es bekannt, den Luftfilter aus dem Schmutzbehälter zu entnehmen, und dann zu säubern. Von Nachteil dabei ist, daß der Luftfilter entnommen werden muß, obwohl der Schmutzbehälter selbst über einen Auslaß entleerbar ist und so auch der Luftfilter gesäubert werden könnte. Ein Klopfen auf den Schmutzbehälter führt zwar zu einem teilweisen Lösen des anhaftenden Schmutzes am eingesetzten Luftfilter, eine vollständige Reinigung kann damit aber nicht gewährleistet werden.

Der Erfindung liegt somit die Aufgabe zugrunde, einen Luftfilter der eingangs geschilderten Art zu schaffen, der sich besonders einfach von Schmutz nahezu vollständig reinigen läßt, ohne daß dafür der Luftfilter aus dem Schmutzbehälter entnommen werden muß.

Die Erfindung löst die gestellte Aufgabe dadurch, daß die Halterung eine gegenüber der Filtermembran bewegbare Reinigungseinrichtung trägt, die beim Reinigen der Filtermembran an der Filtermembran zumindest bereichsweise anliegt.

Trägt die Halterung eine gegenüber der Filtermembran bewegbare Reinigungseinrichtung, die beim Reinigen der Filtermembran an der Filtermembran zumindest bereichsweise anliegt, so kann die Filtermembran von Schmutz befreit werden, ohne daß der Luftfilter aus dem Filtergehäuse herausgenommen werden muß. Der Luftfilter kann daher gegenüber den bekannten Luftfiltern beim Entleeren des Schmutzbehälters im Schmutzbehälter verbleiben und gleichzeitig mit einem Betätigen der Reinigungseinrichtung vergleichsweise einfach gesäubert werden. Dabei ist es nicht von Bedeutung, daß die Reinigungseinrichtung an der Filtermembran immer anliegen muß, es reicht aus, wenn bereichsweise die Reinigungseinrichtung anliegt, da das Lösen von anhaftendem Schmutz die Filtermembran in reinigende Schwingungen versetzen kann.

Weist die Reinigungseinrichtung einen Abstreifer auf, der zumindest bereichsweise die Filtermembran aus seiner Bewegungsbahn drängt, so kann damit besonders anhaftender Schmutz von der Filtermembran gelöst bzw. entfernt werden. Die Filtermembran verformt sich nämlich in diesem vom Abstreifer beaufschlagten Bereich, wodurch der anhaftende Schmutz seine Haftung an der Filtermembran immer weiter verringert bzw. schlußendlich verliert. Dabei ist der Verlauf der Filtermembran nicht von Bedeutung, es kommt lediglich darauf an, daß die Filtermembran bereichsweise seine vorgegebene Lage verändert.

Für einfache Konstruktionsverhältnisse bildet die im Querschnitt zickzack verlaufende Filtermembran einen Kartuschenmantel aus, in dessen Hohlraum die Reinigungseinrichtung vorgesehen ist. Die Reinigungseinrichtung berührt dann nicht die mit Schmutz behaftete Seite der Filtermembran, was beim Bedienen der Reinigungseinrichtung einen Kontakt mit gelöstem Schmutz ausschließt. Der Luftfilter ist daher besonders für Personen geeignet, die allergische Reaktionen auf Schmutz besitzen. Außerdem werden vom Abstreifer die in der Bewegungsbahn liegenden Spitzen der im Querschnitt zickzack verlaufenden Filtermembran verbogen, was bei einem Abgleiten des Abstreifers die Filtermembran in reinigende Schwingungen versetzt. Diese gedämpften Schwingungen sind besonders zum Lösen von stark haftenden Schmutz geeignet. Einfache Bedienverhältnisse ergeben sich, wenn die Reinigungseinrichtung aus einem den Abstreifer tragenden Gestell besteht, das von der Absaugseite der Filtermembran mit einem Drehgriff durch die Saugöffnung vorragt und an der Halterung drehbar gelagert ist.

Ist die Filtermembran auf der der Halterung gegenüberliegenden Seite mit einer Abdeckkappe fest verbunden, so eröffnet sich die konstruktiv einfache Möglichkeit, das Gestell in einem verschiebefesten Drehlager auf der Abdeckkappe und einem Loslager der Halterung zu lagern. Wird der Abstreifer von vier paarweise gegenüberliegenden Rippen ausgebildet, die gegenüber der Filterhöhe am Gestell mittig angeordnet sind, so kann die Filtermembran besonders einfach in Schwingungen versetzt werden.

In der Zeichnung ist der Erfindungsgegenstand beispielsweise anhand eines Ausführungsbeispiels dargestellt. Es zeigen
- Fig. 1: eine teilweise aufgerissene Seitenansicht des erfindungsgemäßen Luftfilters und
- Fig. 2: den Luftfilter in einem Schnitt nach II-II der Fig. 1 in einer vergrößerten Draufsicht.

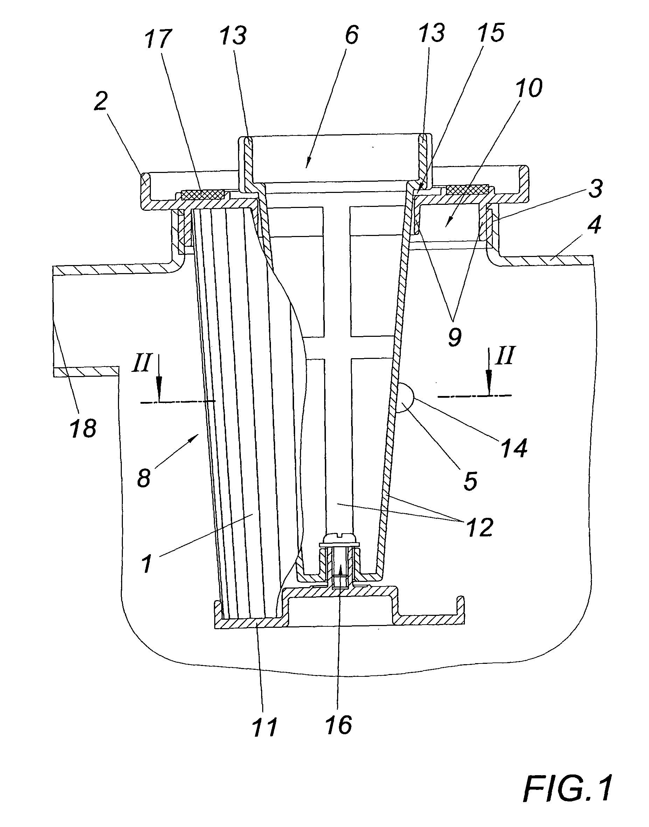

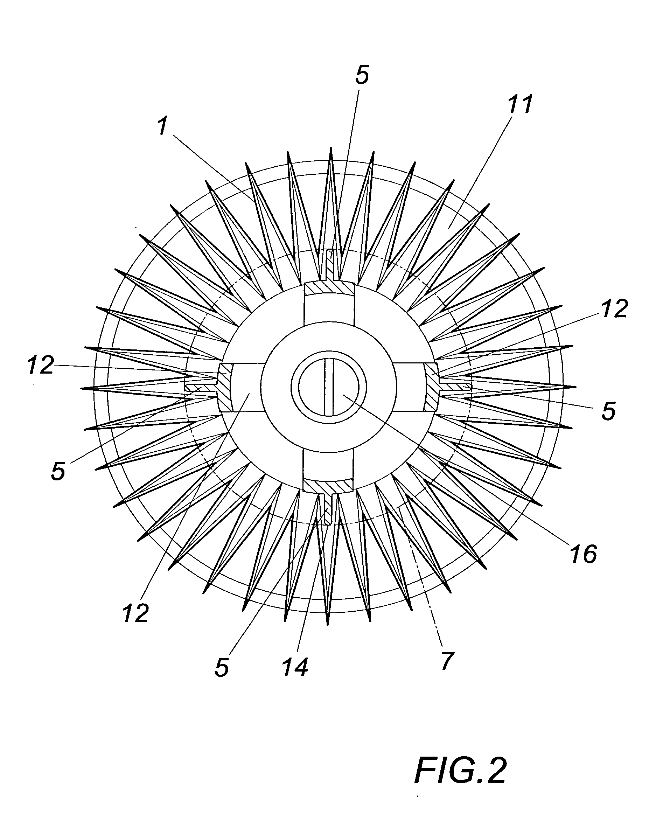

Der nach Fig. 1 beispielsweise dargestellte, erfindungsgemäße Luftfilter weist eine Filtermembran 1 auf, die von einer Halterung 2 aufgenommen wird und Schmutz aus der durch ihn strömenden Luft abtrennt. Die Halterung 2 ist mit einer Befestigungsvorrichtung 3, insbesondere einem Gewinde ausgestattet, über das der Luftfilter auswechselbar in einem Schmutzbehälter 4 eingesetzt ist. Die Halterung 2 trägt eine gegenüber der Filtermembran 1 bewegbare Reinigungseinrichtung, die beim Reinigen der Filtermembran 1 an der Filtermembran 1 zumindest bereichsweise anliegt. Hiezu weist die Reinigungseinrichtung ein Abstreifer 5 im Ansaugbereich 6 des Luftfilters auf, wobei es aber auch durchaus denkbar ist, diesen Abstreifer 5 auf der, dem Ansaugbereich 6 gegenüberliegenden Seite der Filtermembran 1 vorzusehen. Der Abstreifer 5 drängt zumindest bereichsweise die Filtermembran 1 aus seiner Bewegungsbahn 7, was insbesondere der Fig. 2 zu entnehmen ist, wodurch aufgrund der Verlagerung der Filtermembran 1 besonders anhaftender Schmutz gelöst werden kann. Im Gegensatz zum Stand der Technik muß daher der erfindungsgemäße Luftfilter nicht aus dem Schmutzbehälter 4 herausgenommen und gereinigt werden, sondern der Luftfilter kann über den Abstreifer 5 im seinem eingesetzten Zustand gesäubert werden, was besonders benutzerfreundlich ist.

Der Luftfilter weist die Form eines Kartuschenfilters auf, wobei der kartuschenartige Mantel 8 des Luftfilters durch die im Querschnitt Zickzack verlaufende Filtermembran 1 ausgebildet wird. Die Filtermembran 1 ist mit der Halterung 2 fest verbunden. Hiefür bildet die Halterung 2 einen durch zwei Stege 9 begrenzten Kreisring 10 aus, in dem die Filtermembran 1 eingeklebt ist. Auf der der Halterung 2 gegenüberliegenden Seite des Filtermantels 8 ist eine Abdeckkappe 11 vorgesehen, in die ähnlich wie bei der Halterung 2 die Filtermembran 1 eingeklebt ist. In der Mitte der Halterung 2 ist eine Ansaugöffnung vorgesehen, in die ein Gestell 12 drehbar eingesetzt ist. Auf dem Gestell 12 sind vier paarweise gegenüberliegende Abstreifer 5 vorgesehen, die bei einem Drehen des Gestells 12 über einen vom Gestell 12 ausgeformten, der Halterung 2 vorstehenden Drehgriff 13 die Spitzen der zickzack verlaufenden Filtermembran 1 aus der Bewegungsbahn 7 des Abstreifers 5 drängen.

Mit der mittigen Anordnung eines mit einer kleinen Berührungsfläche 14 ausgestatteten Abstreifers 5 in Form von vier paarweise gegenüberliegenden Rippen, wird die Filtermembran 1 bereichsweise stark verlagert, was beim Zurückschnellen der Filtermembran 1 zu Erschütterungen und so zu einer besonders guten Reinigung der Filtermembran 1 führt. Um einfache Konstruktionsverhältnisse zu schaffen, wird das Gestell 12 in der Öffnung der Halterung 2 über ein Loslager 15 und an der Abdeckkappe 11 über ein Festlager 16 gehalten. Für das luftdichte Einetzen des Luftfilters weist dar Schmutzbehälter 4 einen Dichtring 17 auf.

Es ist nicht von Belang, ob für den Auslaß 18 eine eigene Öffnung im Schmutzbehälter 4 vorhanden ist, oder ob dafür die Luftöffnung verwendet wird, über die die vom Luftfilter zu reinigende Luft in den Schmutzbehälter 4 geführt wird, es kommt lediglich darauf an, daß der Luftfilter in seinem eingebauten Zustand von Schmutz gesäubert werden kann.

## Patentansprüche

1. Luftfilter mit einer eine Filtermembran fest aufnehmenden Halterung zum Befestigen des Luftfilters in einem Schmutzbehälter, der zum Entleeren des vom Filter aus der Luft abgetrennten Schmutzes einen Auslaß aufweist, **dadurch gekennzeichnet, daß** die Halterung (2) eine gegenüber der Filtermembran (1) bewegbare Reinigungseinrichtung trägt, die beim Reinigen der Filtermembran (1) an der Filtermembran (1) zumindest bereichsweise anliegt.

2. Luftfilter nach Anspruch 1, **dadurch gekennzeichnet, daß** die Reinigungseinrichtung einen Abstreifer (5) aufweist, der zumindest bereichsweise die Filtermembran (1) aus seiner Bewegungsbahn (7) drängt.

3. Luftfilter nach Anspruch 2, **dadurch gekennzeichnet, daß** die im Querschnitt zickzack verlaufende Filtermembran (1) einen Kartuschenmantel (8) ausbildet und daß die Reinigungseinrichtung aus einem den Abstreifer (5) tragenden Gestell (12) besteht, das von der Absaugseite der Filtermembran (1) mit einem Drehgriff (13) durch die Saugöffnung (6) vorragt und an der Halterung (2) drehbar gelagert ist.

4. Luftfilter nach Anspruch 3, **dadurch gekennzeichnet**, das die Filtermembran (1) auf der, der Halterung (2) gegenüberliegenden Seite mit einer Abdeckkappe (11) fest verbunden ist, daß das Gestell (2) über ein verschiebefestes Drehlager (16) der Abdeckkappe und ein Loslager (15) der Halterung (2) drehbar gelagert ist und daß der Abstreifer (5) von vier paarweise gegenüberliegenden Rippen ausgebildet wird, die gegenüber der Filterhöhe am Gestell (12) mittig angeordnet sind.
